# EUROPEAN PATENT SPECIFICATION

(11) **EP 2 215 679 B1**
(45) Date of publication and mention of the grant of the patent: **28.12.2011**
(21) Application number: 08849407.5
(22) Date of filing: 11.11.2008
(51) Int. Cl.: H01M 8/04

(54) **FUEL CELL SYSTEM**
BRENNSTOFFZELLENSYSTEM
SYSTÈME DE PILE À COMBUSTIBLE

(30) Priority: 14.11.2007 JP 2007295536
(43) Date of publication of application: 11.08.2010
(73) Proprietor: Toyota Jidosha Kabushiki Kaisha, Toyota-shi, Aichi-ken, 471-8571 (JP)
(72) Inventor: ISHIKAWA, Takashi, Kariya-shi, Aichi-ken, 448-8650 (JP)
(74) Representative: Winter, Konrad Theodor
(86) International application number: PCT/IB2008/003029
(87) International publication number: WO 2009/063283

(56) References cited:
- EP-A- 1 046 535
- EP-A- 1 513 208
- EP-A- 1 702 842
- EP-A- 1 758 195
- JP-A- 2005 056 836
- JP-A- 2006 236 758
- US-A- 3 507 702
- US-A1- 2006 057 434
- US-A1- 2006 159 969

## Description

### BACKGROUND OF THE INVENTION

### 1. Field of the Invention

The invention relates to a fuel cell system.

### 2. Description of the Related Art

Japanese Patent Application Publication No. 2006-236758 (JP-A-2006-236758) discloses a conventional fuel cell system. As shown in FIG 1 of JP-A-2006-236758, the fuel cell system includes a fuel cell 10 for generating power using a fuel gas (anode gas) supplied to a fuel electrode 11 and an oxidant gas supplied to an oxidant electrode 12, a reformer 20 for generating the fuel gas and supplying it to the fuel electrode, a fuel cell heating medium circulation circuit 73 for circulating a fuel cell heating medium that performs heat exchange with the fuel gas and the fuel cell 10, a condensing coolant circulation circuit 75 for circulating a condensing coolant that performs heat exchange with at least one of a fuel off-gas (anode off-gas) discharged from the fuel electrode 11 of the fuel cell 10, an oxidant off-gas (cathode off-gas) discharged from the oxidant electrode 12 of the fuel cell 10, and a combustion exhaust gas discharged from the reformer 20, a hot water storage tank 71 storing stored hot water, and a stored hot water circulation circuit 72 for circulating the stored hot water, which performs heat exchange with the fuel cell heating medium circulating through the fuel cell heating medium circulation circuit 73 and the condensing coolant circulating through the condensing coolant circulation circuit 75.

In the fuel cell system described in JP-A-2006-236758, the temperature of the fuel gas, and accordingly the dew point of the fuel electrode of the fuel cell, can be regulated by performing heat exchange between the fuel gas and the condensing coolant. However, the condensing coolant also exchanges heat with the fuel off-gas, the oxidant off-gas, and the combustion exhaust gas. In other words, it is difficult to regulate the temperature of the fuel gas alone, and therefore this temperature regulation cannot be performed appropriately and easily.
A fuel cell system according to the preamble of claim 1 is disclosed in US 2006/0057434 A1. Further, fuel cell systems are known from in US 2006/0159969 A1, EP1 513 208 A2, EP1 702 842 A1, US 3,507,702 A, EP1 758 195 A1, JP 2005-056836 A1, and EP 1 046 535 A1.

### SUMMARY OF THE INVENTION

The invention provides a fuel cell system with which the temperature of a fuel gas is regulated appropriately and easily.

An aspect of the invention is a fuel cell system including: a fuel cell for generating power using a fuel gas supplied to a fuel electrode and an oxidant gas supplied to an oxidant electrode; a fuel cell heating medium circulation circuit for circulating a fuel cell heating medium that exchanges heat with the fuel cell; a fuel gas heat exchanger which is disposed on the fuel cell heating medium circulation circuit, and in which the fuel cell heating medium and the fuel gas supplied to the fuel electrode exchange heat; an additional heating medium heat exchanger which is disposed on the fuel cell heating medium circulation circuit, and in which the fuel cell heating medium and an additional heating medium exchange heat; and an electric heater disposed on the fuel cell heating medium circulation circuit.

In the constitution described above, the fuel gas heat exchanger in which the fuel cell heating medium and the fuel gas supplied to the fuel electrode exchange heat, the additional heating medium heat exchanger in which the fuel cell heating medium and the additional heating medium exchange heat, and the electric heater are disposed on the fuel cell heating medium circulation circuit. Hence, by regulating the fuel cell heating medium independently, the temperature of the fuel gas can be regulated independently, and therefore the temperature regulation can be performed appropriately and easily. Moreover, the temperature of the fuel cell heating medium can be raised quickly by the electric heater, and therefore the fuel cell can be warmed up early.

In the aspect, the fuel cell system may further include: a reformer for generating the fuel gas and supplying the fuel gas to the fuel electrode; a condensing coolant circulation circuit for circulating a condensing coolant that exchanges heat with at least one of a fuel off-gas discharged from the fuel electrode, an oxidant off-gas discharged from the oxidant electrode, and a combustion exhaust gas discharged from the reformer; a hot water storage tank for storing stored hot water; and a stored hot water circulation circuit for circulating the stored hot water, which exchanges heat with the condensing coolant circulating through the condensing coolant circulation circuit and the fuel cell heating medium circulating through the fuel cell heating medium circulation circuit, and in the additional heating medium heat exchanger, the fuel cell heating medium and the stored hot water circulating through the stored hot water circulation circuit may exchange heat.

In the constitution described above, the fuel cell heating medium and the stored hot water circulating through the stored hot water circulation circuit exchange heat in the additional heating medium heat exchanger. By exchanging heat between the fuel cell heating medium and the stored hot water, the temperature of the fuel cell heating medium can be regulated appropriately.

In the aspect, the electric heater is disposed downstream of the fuel cell and upstream of the additional heating medium heat exchanger.

In the constitution described above, the electric heater is disposed downstream of the fuel cell and upstream of the additional heating medium heat exchanger. Hence, the fuel cell heating medium raised in temperature by the electric heater, which has a higher temperature than the fuel cell, may be discharged to the fuel cell after being lowered in temperature by the additional heating medium heat exchanger. Therefore, when surplus power is generated, the surplus power can be consumed by the electric heater while temperature variation in the fuel cell is suppressed to a low level.

In the aspect, the electric heater may convert surplus power generated by the fuel cell into heat.

In the constitution described above, the electric heater converts surplus power generated by the fuel cell into heat. As a result, reverse power flows can be suppressed.

In the aspect, when the fuel cell heating medium is at or below a predetermined temperature upon completion of warm-up of the reformer during activation of the fuel cell system, the fuel cell heating medium may be warmed up by the electric heater.

In the constitution described above, the fuel cell heating medium is warmed up by the electric heater when the fuel cell heating medium is at or below a predetermined temperature upon completion of warm-up of the reformer during activation of the fuel cell system. Hence, even when the temperature of the fuel cell heating medium is low (during activation or the like, for example), the fuel cell heating medium, and therefore the fuel cell, can be warmed up early and maintained at an appropriate temperature.

In the aspect, the fuel cell heating medium may be warmed up in the fuel cell heating medium circulation circuit on the basis of at least one of an inlet temperature and an outlet temperature of the fuel cell.

In the constitution described above, the fuel cell heating medium is warmed up in the fuel cell heating medium circulation circuit on the basis of at least one of an inlet temperature and an outlet temperature of the fuel cell. Therefore, the fuel cell can be maintained at an appropriate temperature more reliably.

In the constitution described above, the condensing coolant exchanges heat with at least one of the fuel off-gas, the oxidant off-gas, and the combustion exhaust gas in the condensing coolant circulation circuit. Meanwhile, in the fuel gas heat exchanger disposed on the fuel cell heating medium circulation circuit, which is provided separately to the condensing coolant circulation circuit, the fuel cell heating medium and the fuel gas exchange heat. Hence, temperature regulation of the fuel gas can be performed independently, and therefore this temperature regulation can be performed appropriately and easily.

In the aspect, the stored hot water circulating through the stored hot water circulation circuit may exchange heat with the condensing coolant circulating through the condensing coolant circulation circuit and the heating medium circulating through the fuel cell heating medium circulation circuit in that order.

In the constitution described above, the stored hot water circulating through the stored hot water circulation circuit exchanges heat with the condensing coolant circulating through the condensing coolant circulation circuit and the heating medium circulating through the fuel cell heating medium circulation circuit in that order. Hence, heat exchange is performed in the comparatively low-temperature condensing coolant circulation circuit and the comparatively high-temperature fuel cell heating medium circulation circuit in that order, and therefore an improvement in heat recovery efficiency can be achieved.

In the aspect, a flow rate of the stored hot water may be controlled such that a predetermined location of the fuel cell heating medium circulation circuit is regulated to a predetermined temperature range.

In the constitution described above, the flow rate of the stored hot water is controlled to regulate the predetermined location of the fuel cell heating medium circulation circuit to the predetermined temperature range. As a result, the fuel cell can be warmed up quickly and the power generation efficiency of the fuel cell can be maintained at a high level.

In the aspect, the condensing coolant circulation circuit may exchange heat with the fuel off-gas and the oxidant off-gas in that order.

In the constitution described above, the condensing coolant circulation circuit exchanges heat with the fuel off-gas and the oxidant off-gas in that order. Hence, when combustion heat from the fuel off-gas is used to heat the reformer, the fuel off-gas is cooled in advance, and thus the ability to reduce the amount of steam contained in the fuel off-gas can be maintained at a maximum level. As a result, stable combustion of the fuel off-gas can be secured.

In the aspect, an electric heater may be disposed on the fuel cell heating medium circulation circuit.

In the constitution described above, the electric heater is disposed on the fuel cell heating medium circulation circuit. Hence, the temperature of the fuel cell heating medium can be raised quickly by the electric heater, and accordingly, the fuel cell can be warmed up early. As a result, flooding of the fuel electrode during activation can be suppressed.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements, and wherein:
FIG. 1 is a schematic diagram showing an embodiment of a fuel cell system according to the invention;
FIG. 2 is a block diagram of the fuel cell system shown in FIG. 1;
FIG. 3 is a flowchart of a main control program executed by a control device shown in FIG. 2;
FIG. 4 is a flowchart of a power generation operation routine executed by the control device shown in FIG. 2;
FIG. 5 is a flowchart of a control program relating to a fuel cell heating medium circulation circuit, executed by the control device shown in FIG. 2;
FIG. 6 is a flowchart of a control program relating to a condensing coolant circulation circuit, executed by the control device shown in FIG. 2;
FIG. 7 is a flowchart of a control program relating to a stored hot water circulation circuit, executed by the control device shown in FIG. 2;
FIG. 8 is a flowchart of a control program relating to the fuel cell heating medium circulation circuit, executed by the control device shown in FIG. 2;
FIG. 9 is a flowchart of a control program relating to the condensing coolant circulation circuit, executed by the control device shown in FIG. 2;
FIG. 10 is a flowchart of a control program relating to the stored hot water circulation circuit, executed by the control device shown in FIG. 2; and
FIG. 11 is a graph showing a relationship between the temperature of the condensing coolant and a steam recovery rate.

### DETAILED DESCRIPTION OF EMBODIMENTS

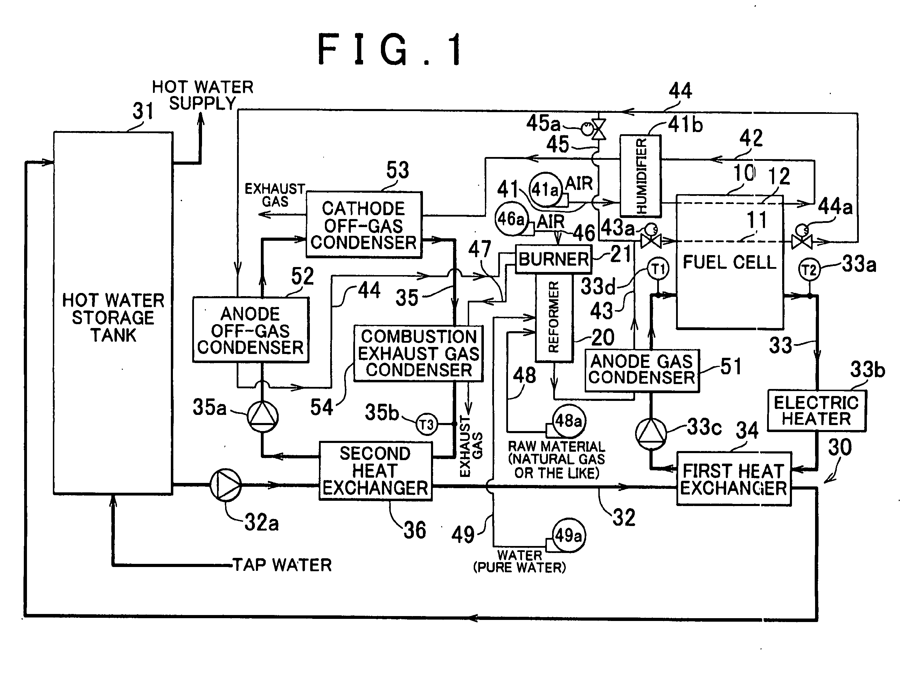

An embodiment of a fuel cell system according to the invention will be described below. FIG. 1 is a schematic diagram showing this fuel cell system. The fuel cell system includes a fuel cell 10, a reformer 20 for generating a fuel gas (reformed gas, anode gas) containing hydrogen gas required by the fuel cell 10, and an exhaust heat recovery system 30 for recovering and using exhaust heat discharged from the fuel cell 10 and/or exhaust heat generated by the reformer 20.

The fuel cell 10 includes a fuel electrode 11 and an air electrode 12 serving as an oxidant electrode, and generates power using the anode gas supplied to the fuel electrode 11 and air (cathode gas) serving as an oxidant gas supplied to the air electrode 12.

The reformer 20 steam-reforms a reformer fuel (raw material) and supplies a resulting hydrogen-rich reformed gas to the fuel cell 10, and is constituted by a reforming unit, a carbon monoxide shift reaction unit (to be referred to hereafter as a carbon monoxide (CO) shift unit), and a carbon monoxide selective oxidation reaction unit (to be referred to hereafter as a CO selective oxidation unit). Examples of the reformer fuel include natural gas, liquefied petroleum gas (LPG), light oil, gasoline, and methanol, and in this embodiment, natural gas is used.

The reforming unit generates hydrogen gas and carbon monoxide gas by reforming a mixed gas, which is obtained by mixing reforming water (steam) supplied from a reforming water pump 49a and the reformer fuel supplied from a reformer fuel pump 48a, using a catalyst (an Ru or Ni-based catalyst, for example) charged into the reforming unit (a so-called steam reforming reaction). At the same time, the steam and carbon monoxide generated in the steam reforming reaction are transformed into hydrogen gas and carbon dioxide (a so-called carbon monoxide shift reaction). These generated gases (so-called reformed gas) are discharged to the CO shift unit.

The CO shift unit causes the carbon monoxide and steam contained in the reformed gas to react using a catalyst (a Cu or Zn-based catalyst, for example) charged into the interior thereof such that the carbon monoxide and steam are transformed into hydrogen gas and carbon dioxide. As a result, the carbon monoxide concentration of the reformed gas is reduced. The reformed gas is then discharged to the CO selective oxidation unit.

The CO selective oxidation unit generates carbon dioxide by causing carbon monoxide remaining in the reformed gas and CO purifying air supplied from the outside to react using a catalyst (an Ru or Pt-based catalyst, for example) charged into the interior thereof. As a result, the carbon monoxide concentration of the reformed gas is reduced further (to or below 10 ppm). The reformed gas is then discharged to the fuel electrode 11 of the fuel cell 10 via an anode gas supply pipe 43.

The CO selective oxidation unit of the reformer 20 is connected to an introduction port of the fuel electrode 11 of the fuel cell 10 via the anode gas supply pipe 43 for supplying the anode gas. A burner 21 of the reformer 20 is connected to a discharge port of the fuel electrode 11 via an anode off-gas supply pipe 44 so that anode off-gas discharged from the fuel electrode 11 can be supplied to the burner 21. A bypass pipe 45 bypassing the fuel cell 10 is connected between the anode gas supply pipe 43 and the anode off-gas supply pipe 44.

A cathode gas supply pipe 41 for supplying the cathode gas and a cathode off-gas supply pipe 42 for discharging cathode off-gas are connected to the air electrode 12 of the fuel cell 10. A humidifier 41b is provided in a midway position of the cathode gas supply pipe 41 and the cathode off-gas supply pipe 42. The humidifier 41b is a steam exchange-type humidifier that supplies steam (including steam generated by the air electrode 12 during power generation) contained in the cathode off-gas to the cathode gas in order to humidify the cathode gas.

A cathode gas pump 41a is disposed on the cathode gas supply pipe 41. A cathode gas supply amount of the cathode gas pump 41a is controlled in accordance with an instruction from a control device 60. An anode gas valve 43a, an anode off-gas valve 44a, and a bypass valve 45a are disposed between a bypass bifurcation point of the anode gas supply pipe 43 and the fuel cell 10, between the fuel cell 10 and a bypass convergence point of the anode off-gas supply pipe 44, and on the bypass pipe 45, respectively. The anode gas valve 43a, anode off-gas valve 44a, and bypass valve 45a are open/close-controlled by instructions from the control device 60.

The reformer 20 is provided with the burner (combustion unit) 21. The anode off-gas supply pipe 44 is connected to the burner 21 such that the anode off-gas is supplied to the burner 21. A combustion air supply pipe 46 is connected to the burner 21 such that combustion air is supplied to the burner 21. The burner 21 burns the anode off-gas using the combustion air and discharges combustion gas to the reforming unit. The combustion gas heats the reforming unit (such that the catalyst of the reforming unit enters an activation temperature region), whereupon the combustion gas is discharged to the outside through a combustion exhaust gas exhaust pipe 47.

A reformer fuel supply pipe 48 for supplying the reformer fuel to the reforming unit and a reforming water supply pipe 49 for supplying the reforming water to the reforming unit are also connected to the reformer 20.

A combustion air pump 46a is disposed in the combustion air supply pipe 46. A combustion air supply amount of the combustion air pump 46a is controlled in accordance with an instruction from the control device 60. A reformer fuel pump 48a is disposed on the reformer fuel supply pipe 48. A reformer fuel supply amount of the reformer fuel pump 48a is controlled in accordance with an instruction from the control device 60. A reforming water pump 49a is disposed on the reforming water supply pipe 49. A reforming water supply amount of the reforming water pump 49a is controlled in accordance with an instruction from the control device 60.

The fuel cell system further includes first through fourth condensers 51 to 54. The first condenser (anode gas condenser) 51 condenses steam contained in the anode gas flowing through the anode gas supply pipe 43 to be supplied to the fuel electrode 11 of the fuel cell 10. The second condenser (anode off-gas condenser) 52 condenses steam contained in the anode off-gas flowing through the anode off-gas supply pipe 44 to be discharged from the fuel electrode 11 of the fuel cell 10. The third condenser (cathode off-gas condenser) 53 condenses steam contained in the cathode off-gas flowing through the cathode off-gas exhaust pipe 42 to be discharged from the air electrode 12 of the fuel cell 10. The fourth condenser (combustion exhaust gas condenser) 54 condenses steam contained in the combustion exhaust gas flowing through the combustion exhaust gas exhaust pipe 47.

A fuel cell heating medium is supplied to the first condenser 51. The first condenser (fuel gas heat exchanger) 51 condenses the steam contained in the anode gas by performing heat exchange between the fuel cell heating medium and the anode gas. A condensing coolant is supplied to the second to fourth condensers 52 to 54, and the second to fourth condensers 52 to 54 condense the steam contained in the respective gases flowing through the second to fourth condensers 52 to 54 by performing heat exchange between the condensing coolant and the respective gases. Water or antifreeze such as a propylene glycol solution is used as the condensing coolant.

Condensed water condensed by the respective condensers 51 to 54 is purified by a purifier and stored temporarily in a water tank. The purified water stored in the water tank is supplied to the reformer 20 by the reforming water pump 49a. The water tank can be replenished with water (tap water, for example).

The exhaust heat recovery system 30 includes a hot water storage tank 31 storing stored hot water, a stored hot water circulation circuit 32 for circulating the stored hot water, which performs heat exchange with the condensing coolant circulating through a condensing coolant circulation circuit 35 and the fuel cell heating medium circulating through a fuel cell heating medium circulation circuit 33, the fuel cell heating medium circulation circuit 33 for circulating the fuel cell heating medium, which performs heat exchange with the fuel cell 10, a first heat exchanger 34 in which heat exchange is performed between the stored hot water and the fuel cell heating medium, the condensing coolant circulation circuit 35 for circulating the condensing coolant, which performs heat exchange with at least one of the anode off-gas, the cathode off-gas, and the combustion exhaust gas, and a second heat exchanger 36 in which heat exchange is performed between the stored hot water and the condensing coolant. The stored hot water circulation circuit 32, fuel cell heating medium circulation circuit 33, and condensing coolant circulation circuit 35 are provided independently of each other.

Thus, exhaust heat (thermal energy) generated during power generation by the fuel cell 10 is recovered by the fuel cell heating medium and recovered by the stored hot water via the first heat exchanger 34, thereby heating (raising the temperature of) the stored hot water. Further, exhaust heat from the anode gas supplied to the fuel cell 10 is recovered by the fuel cell heating medium via the first condenser 51 and recovered by the stored hot water via the first heat exchanger 34, thereby heating (raising the temperature of) the stored hot water.

Exhaust heat from the anode off-gas and cathode off-gas discharged from the fuel cell 10 is recovered by the condensing coolant via the second and third condensers 52, 53 and recovered by the stored hot water via the second heat exchanger 36, thereby heating (raising the temperature of) the stored hot water. Further, exhaust heat of the combustion exhaust gas discharged from the burner 21 is recovered by the condensing coolant via the fourth condenser 54 and recovered by the stored hot water via the second heat exchanger 36, thereby heating (raising the temperature of) the stored hot water.

The exhaust heat discharged from the fuel cell 10 includes not only the exhaust heat of the anode off-gas and cathode off-gas discharged from the fuel cell 10 but also exhaust heat generated during power generation by the fuel cell 10. The exhaust heat generated by the reformer 20 includes the exhaust heat of the anode gas, the exhaust heat of the combustion exhaust gas discharged from the burner 21, and exhaust heat generated by heat exchange in the reformer 20 (i.e. the exhaust heat of the reformer itself).

The hot water storage tank 31 includes a single column-shaped container, and hot water is stored in the interior thereof in layer form. More specifically, the hot water is stored such that the temperature in an upper portion is the highest temperature, whereupon the temperature falls gradually toward a lower portion such that the temperature in the lower portion is the lowest temperature. Water (low-temperature water) such as tap water is added to the lower portion of the column-shaped container of the hot water storage tank 31, and the high-temperature hot water stored in the hot water storage tank 31 is discharged from the upper portion of the column-shaped container of the hot water storage tank 31.

A first end and a second end of the stored hot water circulation circuit 32 are connected respectively to the lower portion and the upper portion of the hot water storage tank 31. A stored hot water circulation pump 32a serving as stored hot water circulation means, the second heat exchanger 36, and the first heat exchanger 34 are disposed on the stored hot water circulation circuit 32 in sequence from the first end to the second end. The stored hot water circulation pump 32a sucks up the stored hot water in the lower portion of the hot water storage tank 31 and causes the stored hot water to flow through the stored hot water circulation circuit 32 in the direction of an arrow shown in the drawing such that the stored hot water is discharged into the upper portion of the hot water storage tank 31. The stored hot water circulation pump 32a is controlled by the control device 60 to control the flow rate (delivery rate) of the stored hot water. Thus, the stored hot water circulating through the stored hot water circulation circuit 32 performs heat exchange with the condensing coolant circulating through the condensing coolant circulation circuit 35 and the heating medium circulating through the fuel cell heating medium circulation circuit 33 in that order.

A second temperature sensor 33a, an electric heater 33b, the first heat exchanger 34, a fuel cell heating medium circulation pump 33c, the first condenser 51, and a first temperature sensor 33d are disposed on the fuel cell heating medium circulation circuit 33 in an upstream-downstream order originating from the fuel cell 10.

The first temperature sensor 33d and the second temperature sensor 33a respectively detect a temperature T1 and a temperature T2 of the fuel cell heating medium at an inlet and an outlet of the fuel cell 10, and transmit detection results to the control device 60.

The electric heater 33b is controlled by an instruction from the control device 60 to generate heat upon electrification. The electric heater 33b is preferably disposed downstream of the fuel cell 10 and upstream of the first heat exchanger (additional heating medium heat exchanger) 34. The electric heater 33b is electrified by surplus power generated by the fuel cell 10, and converts this power into heat. When the temperature of the fuel cell heating medium is equal to or lower than a predetermined temperature once warm-up of the reformer 20 is complete during activation of the fuel cell system, the electric heater 33b is electrified in order to warm up the fuel cell heating medium.

The fuel cell heating medium circulation pump 33c circulates the fuel cell heating medium through the fuel cell heating medium circulation circuit 33 in the direction of an arrow shown in the drawing. The fuel cell heating medium circulation pump 33c is controlled by the control device 60 to control the flow rate (delivery rate) of the fuel cell heating medium.

A condensing coolant circulation pump 35a, the second condenser 52, the third condenser 53, the fourth condenser 54, and a third temperature sensor 35b are disposed on the condensing coolant circulation circuit 35 in an upstream-downstream order originating from the second heat exchanger 36.

The condensing coolant circulation pump 35a circulates the condensing coolant through the condensing coolant circulation circuit 35 in the direction of an arrow shown in the drawing. The condensing coolant circulation pump 35a is controlled by the control device 60 to control the flow rate (delivery rate) of the condensing coolant. Thus, the condensing coolant circulating through the condensing coolant circulation circuit 35 performs heat exchange with the anode off-gas and the cathode off-gas in that order.

The third temperature sensor 35b detects a temperature T3 of the condensing coolant at an inlet to the second heat exchanger 36, and transmits a detection result to the control device 60.

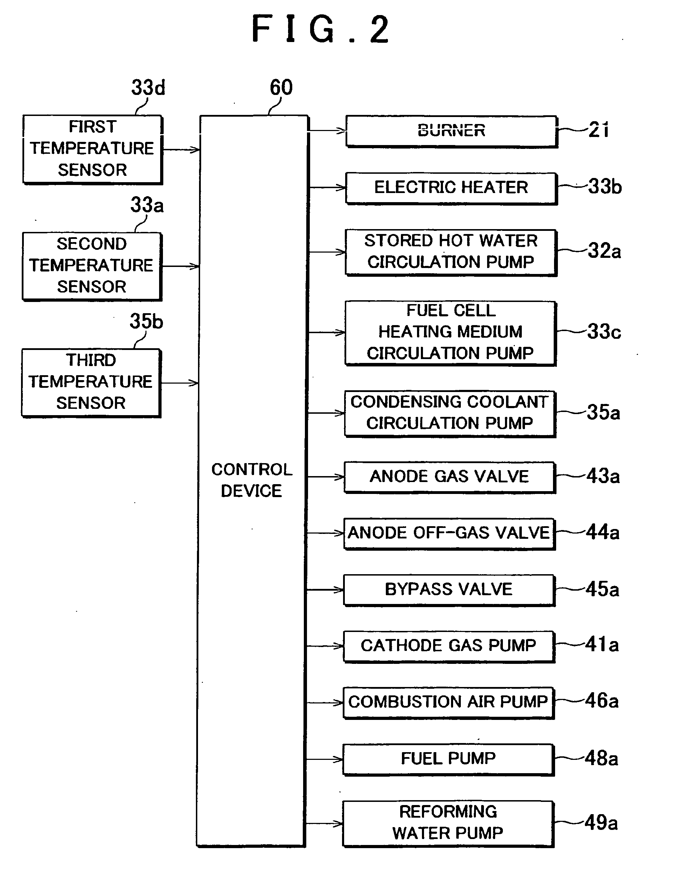

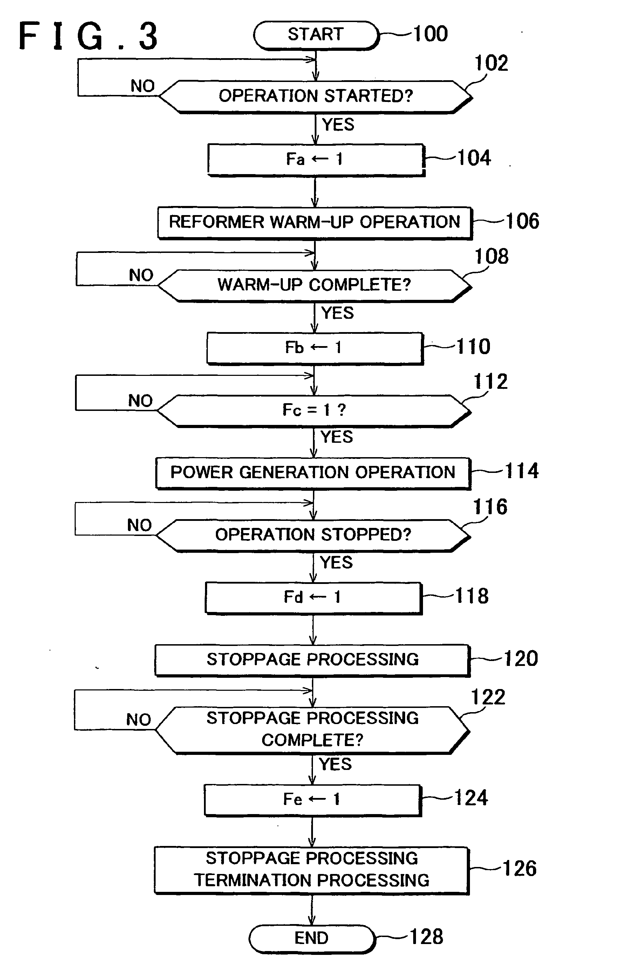

The fuel cell system further includes the control device 60. The respective temperature sensors 33a, 33d, 35b, the respective pumps 32a, 33c, 35a, 41a, 46a, 48a, 49a, the respective valves 43a, 44a, 45a, the electric heater 33b, and the burner 21 described above are connected to the control device 60 (see FIG 2). The control device 60 includes a microcomputer (not shown), and the microcomputer includes an input/output interface, a central processing unit (CPU), random access memory (RAM), and read only memory (ROM) (none of which are shown in the drawings), which are connected via a bus. The CPU performs an operation of the fuel cell system by executing a program corresponding to the flowcharts shown in FIGS. 3 to 9. The RAM stores variables required to execute this program temporarily. The ROM stores the program.

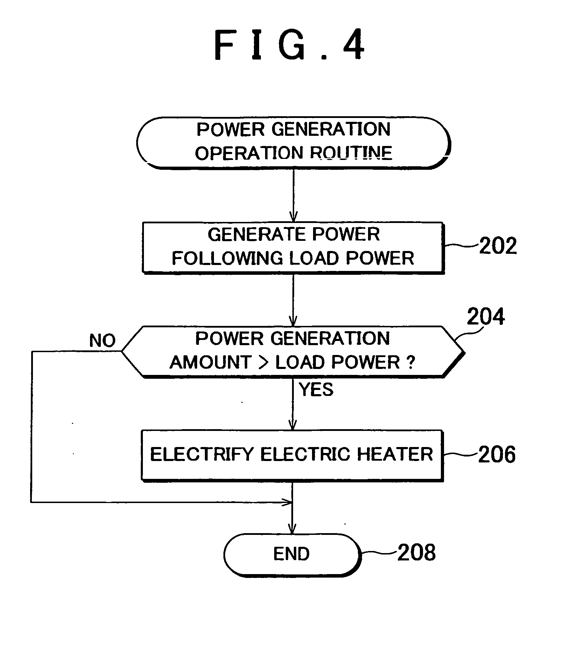

An example of an overall operation of the fuel cell system described above will now be described with reference to FIGS. 3 and 4. When a main power supply, not shown in the drawings, is switched ON, the control device 60 activates the program in a step 100 and then advances to a step 102. Note that when the program is activated, flags Fa to Fe are set respectively at "0".

In the step 102, the control device 60 determines whether an operation has begun. When a start switch, not shown in the drawing, has been depressed to begin an operation or an operation has begun in accordance with an operation plan, the control device 60 determines "YES" in the step 102 and sets a flag Fa at "1" (step 104). The control device 60 then implements a warm-up operation of the reformer 20 (step 106). When an operation has not begun, the control device 60 repeats the determination of the step 102. The operation plan is a plan determined in advance through learning control or the like, whereby activation/stoppage of the fuel cell system is controlled on the basis of the operation plan rather than being activated as soon as the main power supply is switched ON. The flag Fa is used to indicate that the warm-up operation of the reformer 20 is underway, and is set at "1" when the warm-up operation is underway and at "0" when the warm-up operation is not underway.

When the warm-up operation (activation operation) has begun, the control device 60 closes the anode valve 43a and anode off-gas valve 44a and opens the bypass valve 45a in the step 106. At the same time, the control device 60 drives the combustion air pump 46a to supply combustion air to the burner 21. Further, the control device 60 electrifies an ignition electrode of the burner 21. The control device 60 also drives the fuel pump 48a to supply reformer fuel to the reformer 20. The reformer fuel is supplied to the burner 21 via the bypass pipe 45, without passing through the reformer 20 and the fuel cell 10. As a result, the reformer fuel is burned in the burner 21 such that the reforming unit and an evaporation unit are heated by resulting combustion gas.

The control device 60 then controls the reforming water pump 49a to supply a predetermined amount of water to the evaporation unit, and accordingly the reforming unit. As a result, reformer fuel and steam are supplied to the reforming unit such that the aforementioned steam reforming reaction and carbon monoxide shift reaction occur in the reforming unit, whereby reformed gas is generated.

The reformed gas that is discharged from the reforming unit is subjected to a reduction in carbon monoxide gas by the CO shift unit and the CO selective oxidation unit and then discharged from the CO selective oxidation unit. The reformed gas is then supplied directly to the burner 21 through the bypass pipe 45, without passing through the fuel cell 10, and burned.

During this reformed gas generation operation (during warm-up of the reformer 20), the control device 60 detects the catalyst temperature of the CO shift unit (or the catalyst temperature of the CO selective oxidation unit as desired) in a step 108, and determines whether or not the detected temperature is equal to or higher than a predetermined temperature. When the temperature is lower than the predetermined temperature, the control device 60 repeats the processing of the step 108 under the assumption that the carbon monoxide concentration of the reformed gas is higher than a predetermined low concentration, or in other words that warm-up is not complete.

When the catalyst temperature of the CO shift unit is equal to or higher than the predetermined temperature, that is, this indicates that the carbon monoxide concentration nf the reformed gas is equal to or lower than the predetermined low concentration, and therefore the control device 60 determines that warm-up of the reformer 20 is complete and sets a flag Fb to "1" (step 110). The flag Fb is used to indicate that warm-up of the reformer 20 is complete, and is set at "1" when warm-up is complete and at "0" when warm-up is not complete.

When warm-up of the reformer 20 is complete, the control device 60 determines in a step 112 whether or not warm-up of the fuel cell 10 is complete at that point. In other words, the control device 60 determines whether a flag Fc is at "1". As regards the flag Fc, the warm-up state of the fuel cell (for example, a temperature Ts of a fuel cell stack or the temperatures T1, T2 of the fuel cell heating medium) is monitored in a separate routine, and when warm-up is complete (for example, when the temperature T1 reaches or exceeds a predetermined temperature T1a), the flag Fc shows "1". When the flag Fc is at "1", the control device 60 determines that warm-up of the fuel cell 10 is complete and performs a power generation operation (step 114). When the flag Fc is at "0", the control device 60 determines that warm-up of the fuel cell 10 (warm-up of the fuel cell system) is not complete, and repeats the processing of the step 112.

In the step 114, the control device 60 executes the program in accordance with a power generation operation routine shown in FIG 4, whereby power generation is performed in the fuel cell 10. The control device 60 executes this routine repeatedly throughout the power generation operation. The control device 60 detects a load power, which is the power consumption of a load device not shown in the drawings, and causes the fuel cell 10 to generate power following the load power (step 202). More specifically, the control device 60 calculates a reformer fuel supply amount for obtaining an output power corresponding to the load power, drives the fuel pump 48a to obtain the calculated supply amount, calculates a reforming water supply amount on the basis of the calculated reformer fuel supply amount and an S/C (steam/carbon ratio), and drives the reforming water pump 49a to obtain the calculated supply amount. Further, the control device 60 calculates a combustion air supply amount on the basis of the reformer fuel supply amount and so on, and drives the combustion air pump 46a to obtain the calculated supply amount.

The control device 60 detects a power generation amount of the fuel cell 10, and when the power generation amount is greater than the load power, the control device 60 electrifies the electric heater 33b (step 206). When the electric heater 33b is electrified during power generation, the temperature of the fuel cell heating medium is raised by resulting thermal energy. In the first heat exchanger 34, heat exchange is performed between the fuel cell heating medium raised in temperature by the electric heater 33b and the stored hot water. When the stored hot water in the first heat exchanger 34 is at a lower temperature than the fuel cell heating medium, the thermal energy of the electric heater 33b is recovered in the stored hot water by the first heat exchanger 34.

When the power generation amount is equal to or smaller than the load power, on the other hand, the control device 60 causes the fuel cell 10 to generate power following the load power. To generate power following the load power, at predetermined time period intervals, an average load power of the previous predetermined time period to the current predetermined time period is calculated, and the output power of the fuel cell 10 is controlled to obtain the calculated average load power. In a case where the power generation amount is greater than the load power, load power variation that cannot be followed by the fuel cell 10 and temporary (momentary) variation in the load power occur even when the fuel cell 10 generates power following the load power. In such cases, the electric heater is electrified to ensure that a reverse power flow does not occur.

During this power generation operation, the control device 60 determines in a step 116 whether or not the operation has been stopped. When a stop switch, not shown in the drawings, has been depressed to stop the operation or the operation is stopped in accordance with the operation plan, the control device 60 determines "YES" in the step 116 and sets a flag Fd at "1" (step 118). The control device 60 then implements fuel cell system stoppage processing (step 120). When the operation has not been stopped, the control device 60 repeats the determination of the step 116. The flag Fd is used to indicate that stoppage processing of the fuel ceii system is underway, and is set at "1" when the stoppage processing is underway and at "0" when the stoppage processing is not underway.

In the step 120, the control device 60 stops driving the fuel pump 48a to halt the supply of reformer fuel. The control device 60 then stops driving the reforming water pump 49a to halt the supply of reforming water. The control device 60 also closes the anode gas valve 43a and anode off-gas valve 44a and opens the bypass valve 45a. As a result, power generation by the fuel cell 10 is stopped and stoppage processing of the fuel cell system is begun. At this time, the control device 60 continues to drive the combustion air pump 46a such that the combustion air continues to be supplied.

In the stoppage processing of the fuel cell system, the control device 60 detects the catalyst temperature of the CO shift unit (or the catalyst temperature of the CO selective oxidation unit as desired) in a step 122, and determines whether or not the detected temperature is equal to or lower than a predetermined temperature. When the temperature is higher than the predetermined temperature, the control device 60 repeats the processing of the step 122 under the assumption that the stoppage processing of the fuel cell system is not complete.

When the detected temperature is equal to or lower than the predetermined temperature, on the other hand, the control device 60 determines that the stoppage processing of the fuel cell system is complete and sets a flag Fe to "1" (step 124). The control device 60 then terminates the stoppage processing (step 126). The flag Fe is used to indicate that the stoppage processing of the fuel cell system is complete, and is set at "1" when the stoppage processing is complete and at "0" when the stoppage processing is not complete.

In the step 126, the control device 60 stops driving the combustion air pump 46a to halt the supply of combustion air. The control device 60 then closes the bypass valve 45a. The program then advances to a step 128, in which the control device 60 terminates the program.

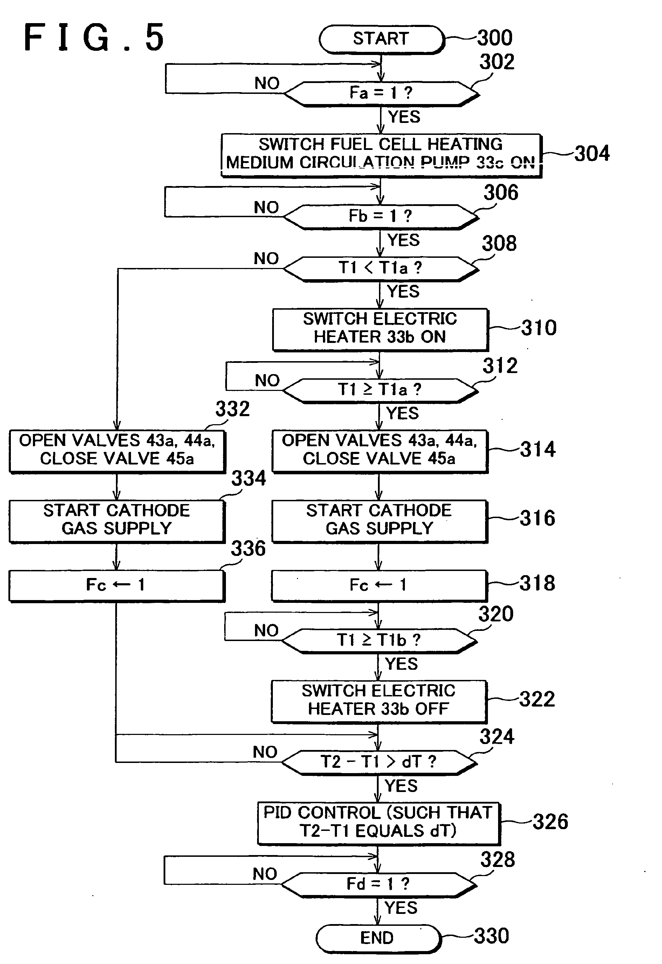

Next, an operation of the exhaust heat recovery system of the fuel cell system will be described. First, an example of an operation of the fuel cell heating medium circulation circuit 33 during the warm-up operation and the power generation operation will be described with reference to FIG 5. When the main power supply, not shown in the drawings, is switched ON, the control device 60 activates the program in a step 300, and then advances to a step 302. Note that when the program is activated, the flags Fa to Fe are set at "0".

In the step 302, the control device 60 determines whether the flag Fa is at "0", or in other words, whether the warm-up operation of the reformer 20 is underway. When the flag Fa is at "1", the control device 60 determines "YES" in the step 302, and switches ON (drives) the fuel cell heating medium circulation pump 33c at an initial set value (initial set flow rate) (step 304). When the flag Fa is not at "1", the control device 60 repeats the determination of the step 302.

When the warm-up operation of the reformer 20 is underway, anode gas from the reformer 20 is supplied to the burner 21 through the first condenser 51, the bypass pipe 45, and the second condenser 52. In the first condenser 51, exhaust heat from the anode gas is recovered in the fuel cell heating medium, leading to an increase in the temperature of the fuel cell heating medium. The raised-temperature fuel cell heating medium is reduced in temperature by the fuel cell 10, whereby the temperature of the fuel cell 10 increases. Further, when the temperature of the fuel cell heating medium is higher than the temperature of the stored hot water in the first heat exchanger 34, the fuel cell heating medium is reduced in temperature by the first heat exchanger 34, whereby the temperature of the stored hot water is increased. Thus, the exhaust heat of the anode gas is used to warm up of the fuel cell 10 and raise the temperature of the stored hot water.

In a step 306, the control device 60 determines whether the flag Fb is at "1", or in other words whether warm-up of the reformer 20 is complete. When the flag Fb is at "1", the control device 60 determines "YES" in the step 306, and determines whether the temperature T1 of the fuel cell heating medium at the inlet to the fuel cell 10 is lower than a warm-up determination temperature T1a (between 50 and 60°C, for example) of the fuel cell 10 (step 308). When the flag Fb is not at "1", the control device 60 repeats the determination of the step 306.

In other words, when warm-up of the reformer 20 is complete, the control device 60 determines whether or not warm-up of the fuel cell 10 is complete (step 308), and when warm-up is not complete, the control device 60 increases the temperature of the fuel cell heating medium using the electric heater 33b. When warm-up of the fuel cell 10 is complete, the warm-up operation of the fuel cell system is terminated without increasing the temperature of the fuel cell heating medium using the electric heater 33b, and the power generation operation is begun (steps 332 to 336).

When warm-up of the fuel cell system is not complete, the control device 60 switches the electric heater 33b ON in a step 310. At this time, power from a system power supply is supplied to the electric heater 33b via an inverter.

Thus, the temperature of the fuel cell heating medium, and accordingly the temperature of the fuel cell 10, is raised using the exhaust heat of the anode gas and the heat generated by the electric heater 33b. In a step 312, the control device 60 detects the temperature T1 of the fuel cell heating medium at the inlet to the fuel cell 10, and determines whether or not the inlet temperature T1 is equal to or higher than the warm-up determination temperature T1a.

When the inlet temperature T1 is lower than the warm-up determination temperature T1a, the control device 60 repeats the determination of the step 312. When the inlet temperature T1 is equal to or higher than the warm-up determination temperature T1a, on the other hand, the control device 60 initiates the power generation operation of the fuel cell 10.

Specifically, the control device 60 opens the anode gas valve 43a and anode off-gas valve 44a and closes the bypass valve 45a such that the reformer 20 is connected to the burner 21 via the fuel cell 10, anode gas from the reformer 20 is supplied to the fuel electrode 11 of the fuel cell 10, and anode off-gas from the fuel electrode 11 is supplied to the burner 21 (step 314). At the same time, the control device 60 switches the cathode gas pump 41a ON such that cathode gas is supplied to the air electrode 12 of the fuei cell 10 and cathode off-gas from the air electrode 12 is discharged via the humidifier 41b and the third condenser 53 (step 316). The control device 60 then sets the flag Fc at "1" (step 318). The flag Fc is used to indicate whether or not warm-up of the fuel cell 10 (warm-up of the fuel cell system) is complete (i.e. whether or not a power generation operation is underway in the fuel cell system), and is set at "1" when warm-up of the fuel cell system is complete (the power generation operation is underway), and at "0" when warm-up of the fuel cell system is not complete (the power generation operation is not underway).

While the electric heater 33b is electrified, the control device 60 detects the temperature T1 of the fuel cell heating medium at the inlet to the fuel cell 10 in a step 320, and determines whether or not the inlet temperature T1 is equal to or higher than an electric heater OFF temperature T1b which is higher than the warm-up determination temperature T1b (between 60 and 70°C, for example). When the inlet temperature T1 is lower than the electric heater OFF temperature T1b, the control device 60 repeats the determination of the step 320. When the inlet temperature T1 is equal to or higher than the electric heater OFF temperature T1b, on the other hand, the control device 60 switches the electric heater 33b OFF (step 322).

When, on the other hand, warm-up of the fuel cell system is complete, the control device 60 terminates the warm-up operation of the fuel cell system using similar processing to that of the steps 314 and 316 described above, and then initiates the power generation operation (steps 332, 334). The control device 60 then sets the flag Fc at "1" (step 336).

When the power generation operation of the fuel cell 10 has begun and is underway, the temperature of the fuel cell 10 rises due to the power generation performed thereby, and as a result, the temperature of the fuel cell heating medium is raised by the heat of the fuel cell 10 such that the outlet temperature T2 becomes higher than the inlet temperature T1. The control device 60 detects the temperature T1 and the temperature T2 of the fuel cell heating medium at the inlet to and the outlet from the fuel cell 10, and determines whether a temperature difference (= T2 - T1) between the temperatures T1, T2 is larger than a target value dT (step 324). The target value dT is between 2 and 7°C, for example.

When the temperature difference (= T2 - T1) between the temperatures T1, T2 is equal to or smaller than dT, the control device 60 repeats the determination of the step 324. When the temperature difference is larger than dT, on the other hand, the control device 60 subjects the fuel cell heating medium circulation pump 33c to PID control to regulate the temperature difference to dT (step 326). At this time, heat generated by the power generation performed in the fuel cell 10 is recovered in the stored hot water via the fuel cell heating medium and the first heat exchanger 34.

In a step 328, the control device 60 determines whether the flag Fd is at "1", or in other words, whether stoppage processing is underway in the fuel cell system. When the flag Fd is not at "1", or in other words when the power generation operation is underway in the fuel cell system, the control device 60 repeats the determination of the step 328. When the flag Fd is at "1", or in other words when stoppage processing is underway in the fuel cell system, the program advances to a step 330, in which the control device 60 terminates the program.

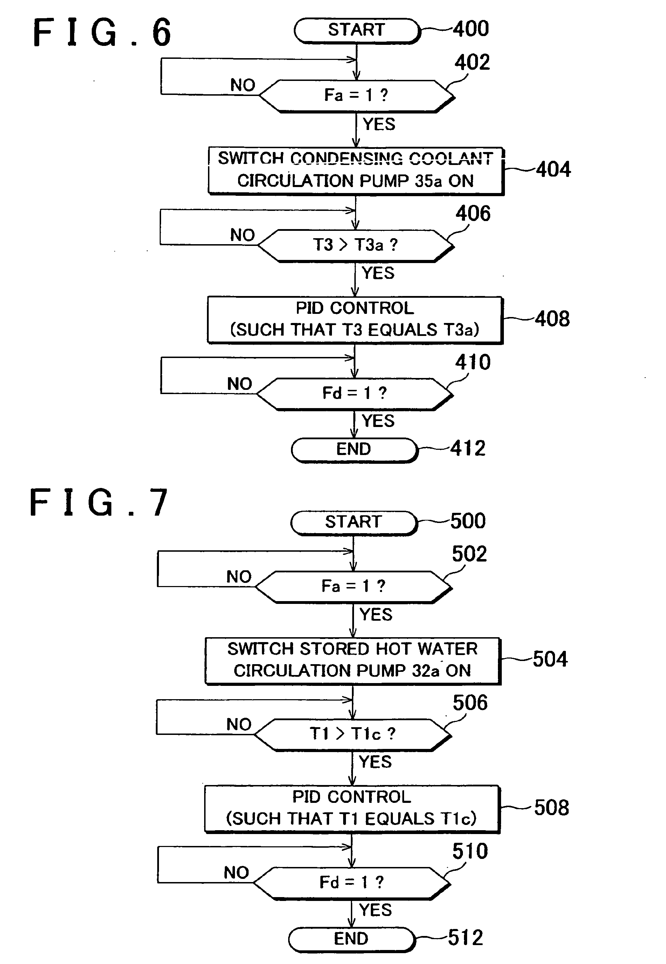

Next, an example of an operation of the condensing coolant circulation circuit 35 during the warm-up operation and the power generation operation will be described with reference to FIG. 6. When the main power supply, not shown in the drawings, is switched ON, the control device 60 activates the program in a step 400, and then advances to a step 402. Note that when the program is activated, the flags Fa to Fe are set at "0".

In the step 402, the control device 60 determines whether the flag Fa is at "1", or in other words whether the warm-up operation of the reformer 20 is underway. When the flag Fa is at "1", the control device 60 determines "YES" in the step 402, and switches ON (drives) the condensing coolant circulation pump 35a at an initial set value (initial set flow rate) (step 404). When the flag Fa is not at "1", the control device 60 repeats the determination of the step 402.

When the warm-up operation of the reformer 20 is underway, anode gas from the reformer 20 is supplied to the burner 21 through the first condenser 51, the bypass pipe 45, and the second condenser 52. Combustion exhaust gas from the burner 21 is discharged through the fourth condenser 54. In the second condenser 52, exhaust heat from the anode off-gas is recovered in the condensing coolant, leading to an increase in the temperature of the condensing coolant. Cathode off-gas is not yet supplied to the raised-temperature condensing coolant, and therefore the condensing coolant is not heat-exchanged in the third condenser 53. In the fourth condenser 54, the raised-temperature condensing coolant is subjected to a further temperature increase by exhaust heat from the combustion exhaust gas, the temperature of which is higher than the temperature of the anode off-gas. The temperature of the condensing coolant is lowered by the second heat exchanger 36, whereby the temperature of the stored hot water is raised. Thus, the exhaust heat of the anode off-gas and the combustion exhaust gas is used to raise the temperature of the stored hot water.

As the temperature of the condensing coolant is raised using the exhaust heat of the anode off-gas and the combustion exhaust gas in this manner, the control device 60 detects the temperature T3 of the condensing coolant at the inlet to the second heat exchanger 36 in a step 406, and determines whether the inlet temperature T3 is higher than a condensing coolant control target temperature T3a (between 40 and 50°C, for example).

When the inlet temperature T3 is equal to or lower than the condensing coolant control target temperature T3a, the control device 60 repeats the determination of the step 406. When the inlet temperature T3 is higher than the condensing coolant control target temperature T3a, on the other hand, the control device 60 subjects the condensing coolant circulation pump 35a to PID control to regulate the temperature T3 of the condensing coolant at the inlet to the second heat exchanger 36 to the condensing coolant control target temperature T3a (step 408). At this time, the exhaust heat of the anode off-gas and combustion exhaust gas is recovered in the stored hot water via the condensing coolant and the second heat exchanger 36.

In a step 410, the control device 60 determines whether the flag Fd is at "1", or in other words whether the stoppage processing is underway in the fuel cell system. When the flag Fd is not at "1", or in other words when the power generation operation is underway in the fuel cell system, the control device 60 repeats the determination of the step 410. When the flag Fd is at "1", or in other words when the stoppage processing is underway in the fuel cell system, the program advances to a step 412, in which the control device 60 terminates the program.

Next, an example of an operation of the stored hot water circulation circuit 32 during the warm-up operation and the power generation operation will be described with reference to FIG. 7. When the main power supply, not shown in the drawings, is switched ON, the control device 60 activates the program in a step 500, and then advances to a step 502. Note that when the program is activated, the flags Fa to Fe are set at "0".

In the step 502, the control device 60 determines whether the flag Fa is at "1", or in other words whether the warm-up operation of the reformer 20 is underway. When the flag Fa is at "1", the control device 60 determines "YES" in the step 502, and switches ON (drives) the stored hot water circulation pump 32a at an initial set value (initial set flow rate) (step 504). When the flag Fa is not at "1", the control device 60 repeats the determination of the step 502.

When the warm-up operation of the reformer 20 is underway, the exhaust heat of the anode off-gas and the combustion exhaust gas is received by the stored hot water in the second heat exchanger 36, leading to an increase in the temperature of the stored hot water. When the temperature of the stored hot water is higher than the temperature of the fuel cell heating medium in the first heat exchanger 34, the heat of the stored hot water is received by the fuel cell heating medium, leading to an increase in the temperature of the fuel cell heating medium. Thus, the exhaust heat of the anode off-gas and the combustion exhaust gas is received by the fuel cell heating medium, and accordingly the fuel cell 10.

As the temperature of the fuel cell heating medium is raised using the exhaust heat of the anode off-gas and the combustion exhaust gas in this manner, the control device 60 detects the temperature T1 of the fuei ceii heating medium at the inlet to the fuel cell 10 in a step 506, and determines whether the inlet temperature T1 is higher than a fuel cell heating medium inlet target temperature T1c (between 60 and 70°C, for example). The fuel cell heating medium inlet target temperature T1c is higher than the fuel cell warm-up determination temperature T1a.

When the inlet temperature T1 is equal to or lower than the fuel cell heating medium inlet target temperature T1c, the control device 60 repeats the determination of the step 506. When the inlet temperature T1 is higher than the fuel cell heating medium inlet target temperature T1c, on the other hand, the control device 60 subjects the stored hot water circulation pump 32a to PID control to regulate the temperature T1 of the fuel cell heating medium at the inlet to the fuel cell 10 to the fuel cell heating medium inlet target temperature T1c (step 508). At this time, the exhaust heat of the anode off-gas and combustion exhaust gas is recovered in the stored hot water via the condensing coolant and the second heat exchanger 36.

In a step 510, the control device 60 determines whether the flag Fd is at "1", or in other words whether the stoppage processing is underway in the fuel cell system. When the flag Fd is not at "1", or in other words when the power generation operation is underway in the fuel cell system, the control device 60 repeats the determination of the step 510. When the flag Fd is at "1", or in other words when the stoppage processing is underway in the fuel cell system, the program advances to a step 512, in which the control device 60 terminates the program.

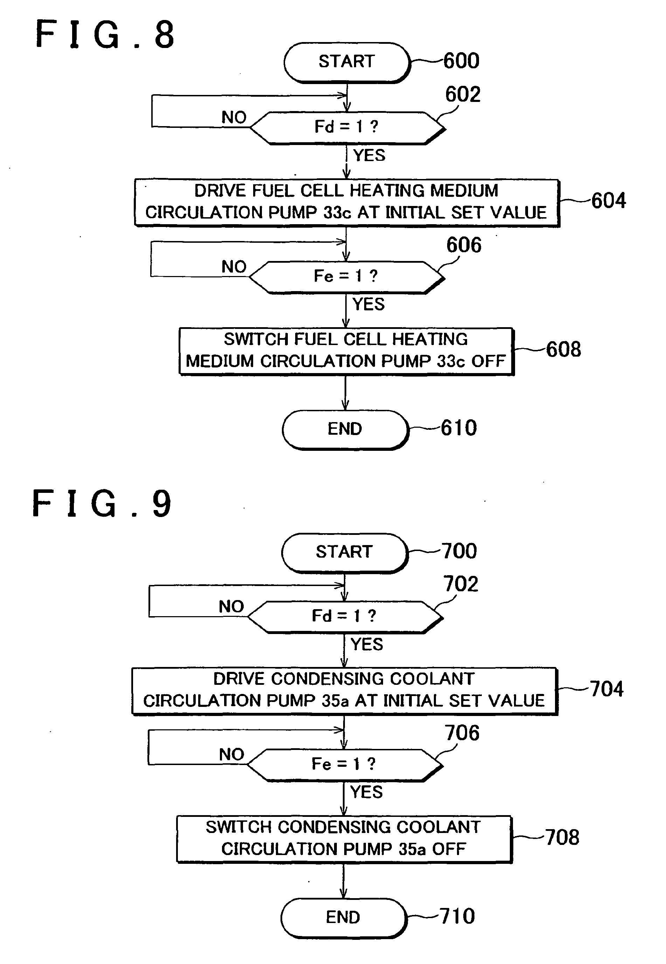

Next, an example of an operation routine relating to the fuel cell heating medium circulation circuit 33 will be described with reference to FIG. 8. When the main power supply, not shown in the drawings, is switched ON, the control device 60 activates the program in a step 600, and then advances to a step 602. Note that when the program is activated, the flags Fa to Fe are set at "0".

In the step 602, the control device 60 determines whether the flag Fd is at "1", or in other words whether the stoppage processing is underway in the fuel cell system. When the flag Fd is at "1", the control device 60 determines "YES" in the step 602, and drives the fuel cell heating medium circulation pump 33c at the initial set value (initial set flow rate) (step 604). When the flag Fd is not at "1", the control device 60 repeats the determination of the step 602.

During the stoppage processing of the fuel cell system, the reformer 20 is cooled by the combustion air. Meanwhile, the fuel cell heating medium circulates through the fuel cell heating medium circulation circuit 33. Hence, boiling can be suppressed by the heat exchange performed in the first condenser 51, and the exhaust heat of the anode gas can be recovered in the fuel cell heating medium.

In a step 606, the control device 60 determines whether the flag Fe is at "1", or in other words whether the stoppage processing of the fuel cell system is complete. When the flag Fe is at "0", the control device 60 repeats the determination of the step 606. When the flag Fe is at "1", the control device 60 determines "YES" in the step 606, and switches the fuel cell heating medium circulation pump 33c OFF (step 608). The program then advances to a step 610, in which the control device 60 terminates the program.

Next, an example of an operation routine relating to the condensing coolant circulation circuit 35 will be described with reference to FIG. 9. When the main power supply, not shown in the drawings, is switched ON, the control device 60 activates the program in a step 700, and then advances to a step 702. Note that when the program is activated, the flags Fa to Fe are set at "0".

In the step 702, the control device 60 determines whether the flag Fd is at "1", or in other words whether the stoppage processing is underway in the fuel cell system. When the flag Fd is at "1", the control device 60 determines "YES" in the step 702, and drives the condensing coolant circulation pump 35a at the initial set value (initial set flow rate) (step 704). When the flag Fd is not at "1", the control device 60 repeats the determination of the step 702.

During the stoppage processing of the fuel cell system, the reformer 20 is cooled by the combustion air. Meanwhile, the condensing coolant circulates through the condensing coolant circulation circuit 35. Hence, boiling can be suppressed by the heat exchange performed in the second condenser 52, the exhaust heat of the anode off-gas can be recovered in the condensing coolant, boiling can be suppressed by the heat exchange performed in the fourth condenser 54, and the exhaust heat of the combustion exhaust gas can be recovered in the condensing coolant.

In a step 706, the control device 60 determines whether the flag Fe is at "1", or in other words whether the stoppage processing of the fuel cell system is complete. When the flag Fe is at "0", the control device 60 repeats the determination of the step 706. When the flag Fe is at "1", the control device 60 determines "YES" in the step 706, and switches the condensing coolant pump 35a OFF (step 708). The program then advances to a step 710, in which the control device 60 terminates the program.

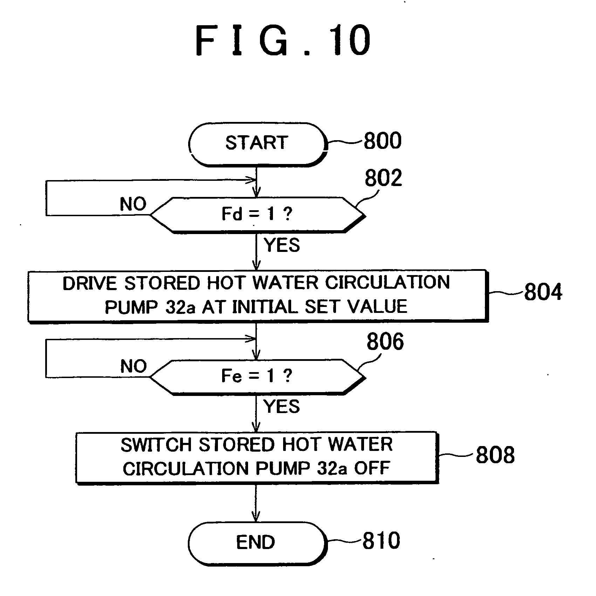

Next, an example of an operation routine relating to the stored hot water circulation circuit 32 will be described with reference to FIG 10. When the main power supply, not shown in the drawings, is switched ON, the control device 60 activates the program in a step 800, and then advances to a step 802. Note that when the program is activated, the flags Fa to Fe are set at "0".

In the step 802, the control device 60 determines whether the flag Fd is at "1", or in other words whether the stoppage processing is underway in the fuel cell system. When the flag Fd is at "1", the control device 60 determines "YES" in the step 802, and drives the stored hot water circulation pump 32a at the initial set value (initial set flow rate) (step 804). When the flag Fd is not at "1", the control device 60 repeats the determination of the step 802.

During the stoppage processing of the fuel cell system, the reformer 20 is cooled by the combustion air. Meanwhile, the stored hot water circulates through the stored hot water circulation circuit 32, and therefore the exhaust heat recovered by the condensing coolant and the exhaust heat recovered by the fuel cell heating medium can be recovered in the stored hot water via the second heat exchanger 36 and the first heat exchanger 34, respectively.

In a step 806, the control device 60 determines whether the flag Fe is at "1", or in other words whether the stoppage processing of the fuel cell system is complete. When the flag Fe is at "0", the control device 60 repeats the determination of the step 806. When the flag Fe is at "1", the control device 60 determines "YES" in the step 806, and switches the stored hot water circulation pump 32a OFF (step 808). The program then advances to a step 810, in which the control device 60 terminates the program.

As described above, during the warm-up operation of the fuel cell system, latent heat and sensible heat from the anode gas are received by the fuel cell heating medium in the first condenser 51 and also received by the fuel cell 10. Warm-up of the fuel cell 10 depends mainly on the latent heat and sensible heat of the anode gas. Further, latent heat and sensible heat from the anode off-gas are received by the condensing coolant in the second condenser 52, while latent heat and sensible heat from the combustion exhaust gas are received by the condensing coolant in the fourth condenser 54. The heat received by the condensing coolant is received by the stored hot water in the second heat exchanger 36, received by the fuel cell heating medium in the first heat exchanger 34, and also received by the fuel cell 10.

By activating the fuel cell system in this manner, the fuel cell heating medium temperature and the anode gas temperature (dew point temperature) can be maintained appropriately, and as a result, stable activation can be realized.

In the power generation operation of the fuel cell system described above, the temperature T1 of the fuel cell heating medium at the inlet to the fuel cell 10 (or the temperature T2 of the fuel cell heating medium at the outlet from the fuel cell 10) is held at a predetermined temperature (within a predetermined temperature range). Further, the difference between the temperature T1 and the temperature T2 of the fuel cell heating medium at the inlet to and the outlet from the fuel cell 10 is held at a predetermined temperature difference. The temperature T3 of the condensing coolant at the inlet to the second heat exchanger 36 is also held at a predetermined temperature (within a predetermined temperature range).

Reasons why the fuel cell system constituted in this manner can recover heat efficiently will now be described. Stored hot water from the bottom portion of the hot water storage tank 31 is discharged to the stored hot water circulation circuit 32. When a user uses the stored hot water, tap water is supplied to the bottom portion of the hot water storage tank 31 in a corresponding amount. The temperature of the stored hot water in the bottom portion of the hot water storage tank 31 is substantially identical to the temperature of the tap water (heat transfer is substantially non-existent in water, and in a hot water use condition in which the temperature of the stored hot water in the bottom portion increases, control is performed to stop the fuel cell system). Meanwhile, the condensing coolant circulation circuit 35 is held at an average temperature of 45°C or less so that a sufficient condensing effect is obtained in the respective condensers 52 to 54, and the fuel cell heating medium is held between 60 and 70°C, which is suitable for power generation in the fuel cell 10.

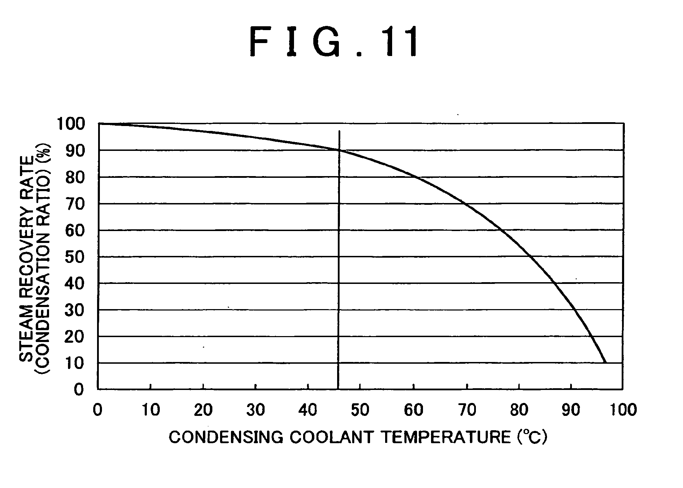

FIG 11 shows a condensation ratio of 100°C saturated steam relative to the temperature of the condensing coolant. As is evident from FIG 11, by holding the condensing coolant at 45°C or less, at least 90% of the steam (latent heat) can be recovered, and therefore efficient heat recovery can be achieved. In actuality, the temperature of the condensing coolant rises in the condensing coolant circulation circuit 35 every time the condensing coolant passes through the condensers after passing through the second heat exchanger 36. Therefore, by setting a maximum temperature of the condensing coolant circulation circuit 35 (for example, the temperature T3 of the condensing coolant at the inlet to the second heat exchanger 36) at no higher than 45°C, the condensing coolant can be held between 25 and 45°C as a whole, whereby latent heat can be recovered effectively.

The stored hot water controlled by the stored hot water circulation pump 32a is controlled such that the fuel cell heating medium is held within the predetermined temperature range. Assuming that the temperature of the condensing coolant circulation circuit 35 is 45°C, the temperature of the stored hot water at the outlet from the second heat exchanger 36 does not exceed 45°C (is held at approximately 44°C, for example) even when heat is recovered with maximum efficiency. When the stored hot water then receives heat from the fuel cell heating medium in the first heat exchanger 34, the temperature thereof can be raised to slightly below 70°C (69°C, for example). At this time, the temperature difference of the stored hot water is 24°C (= 44°C - 20°C) in the second heat exchanger 36 and 25°C (= 69°C - 44°C) in the first heat exchanger 34, and therefore the respective temperature differences in the two heat exchangers 36, 34 take substantially identical values. In other words, an equal amount of heat is exchanged in the two heat exchangers 36, 34, and therefore highly efficient heat recovery can be realized.

The reason for this will now be described. In this embodiment, the first condenser 51 is disposed on the fuel cell heating medium circulation circuit 33 rather than the condensing coolant circulation circuit 35, and as a result, the respective heat amounts (heat recovery amounts) of the fuel cell heating medium circulation circuit 33 and the condensing coolant circulation circuit 35 can be made substantially identical. The following Table 1 shows design-based recoverable heat amounts (using a heating medium temperature of 20°C as a reference) and actually measured heat amounts of the respective condensers 51 to 54 and the fuel cell 10 when the first condenser 51 is disposed on the fuel cell heating medium circulation circuit 33, and actually measured heat amounts of the respective condensers 51 to 54 and the fuel cell 10 when the first condenser 51 is disposed on the condensing coolant circulation circuit 35 (related art).

**[Table 1]**

| | RECOVERABLE AMOUNT (W) (USING 20°C AS A REFERENCE) | THIS EMBODIMENT (W) |
|---|---|---|
| FUEL CELL | 700 | 630 |
| ANODE GAS CONDENSER | 150 | 110 |
| ANODE OFF-GAS CONDENSER | 280 | 270 |
| CATHODE OFF-GAS CONDENSER | 280 | 250 |
| COMBUSTION EXHAUST GAS CONDENSER | 170 | 150 |
| TOTAL | 1580 | 1410 |

According to the constitution of this embodiment, the recoverable heat amount of the fuel cell heating medium circulation circuit 33 is the sum total of the heat generated by the fuel cell 10 and the heat recovery amount of the anode gas condenser 51, i.e. 850 W. The recoverable heat amount of the condensing coolant circulation circuit 35 is the sum total of the respective heat recovery amounts of the condensers 52 to 54, i.e. 730 W. According to the related art constitution, meanwhile, the recoverable heat amount of the fuel cell heating medium circulation circuit 33 is only the heat generated by the fuel cell 10, i.e. 700 W, while the recoverable heat amount of the condensing coolant circulation circuit 35 is the sum total of the respective heat recovery amounts of the condensers 51 to 54, i.e. 880 W.

Hence, the difference between the recoverable heat amount of the fuel cell heating medium circulation circuit 33 and the recoverable heat amount of the condensing coolant circulation circuit 35 is suppressed to a smaller value in this embodiment than in the related art. In other words, the heat amount obtained by the fuel cell heating medium circulation circuit 33 and the heat amount obtained by the condensing coolant circulation circuit 35 are substantially identical, and therefore heat recovery is performed efficiently.

Furthermore, according to the constitution of this embodiment, the temperature of the fuel cell heating medium and condensing coolant circulating through the respective circuits 33, 35 is actually higher than the reference temperature of 20°C, and therefore the heat amounts obtained by the respective condensers 51 to 54 and the fuel cell 10 decrease. For example, the heat amount obtained by the fuel cell heating medium circulation circuit 33 is the sum total of the heat generated by the fuel cell 10 and the heat recovery amount of the anode gas condenser 51, i.e. 740 W. The heat amount obtained by the condensing coolant circulation circuit 35 is the sum total of the respective heat recovery amounts of the condensers 52 to 54, i.e. 670 W. However, the anode gas condenser 51, in which the temperature of the anode gas must be maintained at a temperature (between 60 and 70°C) as close as possible to the temperature of the fuel electrode 11 of the fuel cell 10 in order to maintain the fuel electrode 11 at an appropriate humidity, is disposed in the fuel cell heating medium circulation circuit 33, and therefore, the condensing coolant circulation circuit 35 can be maintained at a comparatively low temperature (45°C, for example). As a result, the heat recovery capacity of the respective condensers 52 to 54 disposed in the condensing coolant circulation circuit 35 can be maintained at a high level.

In a case where the recoverable heat amount of the condensing coolant circulation circuit 35 is larger than the recoverable heat amount of the fuel cell heating medium circulation circuit 33, as in the related art constitution, the amount of heat recovered by the second heat exchanger 36 decreases below the amount of heat in the condensing coolant circulation circuit 35 when the stored hot water flow rate is controlled to hold the inlet temperature T1 (or the outlet temperature T2) of the fuel cell 10 at a constant level. As a result, the temperature of the condensing coolant circulation circuit 35 rises to or above 45°C, leading to a reduction in the steam condensation amount of the anode off-gas and cathode off-gas and an increase in the amount of heat discharged to the outside through the exhaust gas, and thus the balance in the overall heat amount is maintained.

A case in which the other condensers are provided in the fuel cell heating medium circulation circuit 33 of the constitution according to this embodiment in addition to the anode gas condenser 51 will now be described. In this case, the recoverable heat amount of the fuel cell heating medium circulation circuit 33 is greater than the recoverable heat amount of the condensing coolant circulation circuit 35, and therefore the stored hot water flow rate is controlled in an increasing direction to maintain the inlet temperature T1 (or the outlet temperature T2) of the fuel cell 10 at a constant level. By increasing the stored hot water flow rate, the condensing coolant circulation circuit 35 can be maintained at a low temperature. However, the temperature of the fuel cell heating medium passing through the other condensers is comparatively high (between 60 and 70°C) and the amount of heat obtained as condensed latent heat decreases, and therefore, the overall heat recovery amount decreases. Hence, providing the other condensers in the fuel cell heating medium circulation circuit 33 in addition to the anode gas condenser 51 is not appropriate in terms of the overall heat recovery amount.

The reason why the condenser provided in the fuel cell heating medium circulation circuit 33 in this embodiment is the anode gas condenser 51 will now be described. Immediately before being supplied to the fuel electrode 11 of the fuel cell 10, the anode gas undergoes heat exchange with the fuel cell heating medium, which has been regulated to an appropriate temperature for power generation in the fuel cell 10, and therefore the temperature of the anode gas is substantially identical to the temperature of the fuel cell heating medium, or in other words the temperature of the fuel cell 10. As a result, condensation of the steam contained in the anode gas supplied to the fuel electrode 11 can be suppressed. Hence, simply by providing the anode gas condenser 51 for performing heat exchange between the anode gas and the fuel cell heating medium, the anode gas can be supplied to the fuel electrode 11 after being regulated to an appropriate temperature, and flooding in the fuel electrode 11 can be suppressed.

As is evident from the above description, in this embodiment, heat exchange between the condensing coolant and at least one of the fuel off-gas (anode off-gas), the oxidant off-gas (cathode off-gas), and the combustion exhaust gas is performed in the condensing coolant circulation circuit 35. Meanwhile, heat exchange is performed between the fuel cell heating medium and the fuel gas (anode gas) in the fuel gas heat exchanger (anode gas condenser 51) disposed on the fuel cell heating medium circulation circuit 33, which is provided separately to the condensing coolant circulation circuit 35. Hence, temperature regulation of the fuel gas can be performed independently, and as a result, the temperature regulation can be performed appropriately and easily.

Further, the stored hot water that circulates through the stored hot water circulation circuit 32 exchanges heat with the condensing coolant circulating through the condensing coolant circulation circuit 35 and the heating medium (fuel cell heating medium) circulating through the fuel cell heating medium circulation circuit 33 in that order. As a result, heat exchange is performed in the comparatively low-temperature condensing coolant circulation circuit 35 and the comparatively high-temperature fuel cell heating medium circulation circuit 33 in that order, and therefore an improvement in heat recovery efficiency can be achieved. Furthermore, the temperature differences in the two heat exchangers 34, 36 are substantially identical, and therefore heat recovery can be performed with even greater efficiency.

Further, the flow rate of the stored hot water circulation circuit 32 is controlled to regulate the inlet (or outlet) of the fuel cell 10, which serves as a predetermined location of the fuel cell heating medium circulation circuit 33, to a predetermined temperature range (between 60 and 70°C, for example). As a result, the fuel cell 10 can be warmed up quickly and the power generation efficiency of the fuel cell 10 can be maintained at a high level.

Further, the condensing coolant circulation circuit 35 performs heat exchange with the fuel off-gas (anode off-gas) and the oxidant off-gas (cathode off-gas) in that order. Hence, when the combustion heat of the fuel off-gas is used to heat the reformer 20 (when the fuel off-gas is burned by the burner 21 and the reforming unit and evaporation unit are heated by the resulting combustion gas), the fuel off-gas is cooled in advance, and thus the ability to reduce the amount of steam contained in the fuel off-gas is maintained at a maximum level. As a result, reduced-steam fuel off-gas is supplied to the burner 21, whereby stable combustion of the fuel off-gas is secured.

Further, the electric heater 33b is disposed on the fuel cell heating medium circulation circuit 33. Accordingly, the temperature of the fuel cell heating medium can be raised quickly by the electric heater 33b, whereby the fuel cell 10 can be warmed up early. As a result, flooding of the fuel electrode 11 of the fuel cell 10 during activation can be suppressed.

Further, the fuel gas heat exchanger (anode gas condenser) 51 for performing heat exchange between the fuel cell heating medium and the fuel gas (anode gas) that is supplied to the fuel electrode 11 of the fuel cell 10, an additional heating medium heat exchanger (the first heat exchanger 34, for example) for performing heat exchange between the fuel cell heating medium and an additional heating medium (the stored hot water, for example), and the electric heater 33b are disposed on the fuel cell heating medium circulation circuit 33. Hence, by regulating the fuel cell heating medium independently, the temperature of the fuel gas can be regulated independently, and therefore the temperature regulation can be performed appropriately and easily. Moreover, the temperature of the fuel cell heating medium can be raised quickly by the electric heater 33b, and therefore the fuel cell 10 can be warmed up early.

Furthermore, heat exchange between the fuei cell heating medium and the stored hot water circulating through the stored hot water circulation circuit 32 is performed in the additional heating medium heat exchanger (the first heat exchanger 34, for example). By performing heat exchange between the fuel cell heating medium and the stored hot water, the temperature of the fuel cell heating medium can be regulated appropriately.

Further, the electric heater 33b is disposed downstream of the fuel cell 10 and upstream of the additional heating medium heat exchanger (the first heat exchanger 34, for example). As a result, the fuel cell heating medium raised in temperature by the electric heater 33b, which has a higher temperature than the fuel cell 10, can be discharged to the fuel cell 10 after being lowered in temperature by the additional heating medium heat exchanger. Therefore, when surplus power is generated, the surplus power can be consumed by the electric heater 33b while temperature variation in the fuel cell 10 is suppressed to a low level.

Further, the electric heater 33b converts surplus power generated by the fuel cell 10 into heat, and therefore reverse power flows can be suppressed.

Furthermore, when the fuel cell heating medium is at or below the predetermined temperature upon completion of warm-up of the reformer 20 during activation of the fuel cell system (steps 306, 308), the fuel cell heating medium is warmed up by the electric heater 33b (step 310). Hence, even when the temperature of the fuel cell heating medium is low (during activation or the like, for example), the fuel cell heating medium, and therefore the fuel cell 10, can be warmed up early and maintained at an appropriate temperature.

Furthermore, warm-up of the fuel cell heating medium is performed in the fuel cell heating medium circulation circuit 33 on the basis of at least one of the temperatures at the inlet and outlet of the fuel cell 10 (the flowchart of FIG. 7). As a result, the fuel cell 10 can be maintained at an appropriate temperature.

Note that in the embodiment described above, three condensers, namely the second to fourth condensers 52 to 54, are disposed on the condensing coolant circulation circuit 35, but any two of these condensers or any one of these condensers may be disposed on the condensing coolant circulation circuit 35.

Further, in the embodiment described above, the timing for switching the electric heater 33b ON may be set prior to the completion of warm-up of the reformer 20 by predicting the completion of warm-up of the reformer 20. In so doing, the required warm-up time to the start of the power generation operation can be shortened.

## Claims

1. A fuel cell system comprising:
a fuel cell (10) for generating power using a fuel gas supplied to a fuel electrode (11) and an oxidant gas supplied to an oxidant electrode (12);
a fuel cell heating medium circulation circuit (33) for circulating a fuel cell heating medium that exchanges heat with the fuel cell (10);
a fuel gas condenser (51) which is disposed on the fuel cell heating medium circulation circuit (33), and in which the fuel cell heating medium and the fuel gas supplied to the fuel electrode (11) exchange heat;
an additional heating medium heat exchanger (34) which is disposed on the fuel cell heating medium circulation circuit (33), and in which the fuel cell heating medium and an additional heating medium exchange heat; and
an electric heater (33b) disposed on the fuel cell heating medium circulation circuit (33), wherein
the electric heater (33b) is disposed downstream of the fuel cell and upstream of the additional heating medium heat exchanger (34).

2. The fuel cell system according to claim 1, further comprising:
a reformer (20) for generating the fuel gas and supplying the fuel gas to the fuel electrode (11);
a condensing coolant circulation circuit (35) for circulating a condensing coolant that exchanges heat with at least one of a fuel off-gas discharged from the fuel electrode (11), an oxidant off-gas discharged from the oxidant electrode (12), and a combustion exhaust gas discharged from the reformer (20);
a hot water storage tank (31) for storing stored hot water; and
a stored hot water circulation circuit (32) for circulating the stored hot water, which exchanges heat with the condensing coolant circulating through the condensing coolant circulation circuit (35) and the fuel cell heating medium circulating through the fuel cell heating medium circulation circuit (33),
wherein, in the additional heating medium heat exchanger (34), the fuel cell heating medium and the stored hot water circulating through the stored hot water circulation circuit (32) exchange heat.

3. The fuel cell system according to claim 1 or 2, wherein the electric heater (33b) converts surplus power generated by the fuel cell into heat.

4. The fuel cell system according to any one of claims 1 to 3, wherein, when the fuel cell heating medium is at or below a predetermined temperature upon completion of warm-up of the reformer (20) during activation of the fuel cell system, the fuel cell heating medium is warmed up by the electric heater (33b).

5. The fuel cell system according to any one of claims 1 to 4, wherein the fuel cell heating medium is warmed up in the fuel cell heating medium circulation circuit (33) on the basis of at least one of an inlet temperature and an outlet temperature of the fuel cell (10).

6. The fuel cell system according to any one of claims 2 to 5, further comprising:
a fuel off-gas condenser (52) which is disposed on the condensing coolant circulation circuit (35), and in which the condensing coolant and a fuel off-gas discharged from the fuel electrode (11) exchange heat; and
an oxidant off-gas condenser (53) which is disposed on the condensing coolant circulation circuit (35), and in which the condensing coolant and an oxidant off-gas discharged from the oxidant electrode (12) exchange heat.

7. The fuel cell system according to any one of claims 2 to 6, wherein the stored hot water circulating through the stored hot water circulation circuit (32) exchanges heat with the condensing coolant circulating through the condensing coolant circulation circuit (35) and the heating medium circulating through the fuel cell heating medium circulation circuit (33) in that order.

8. The fuel cell system according to any one of claims 2 to 7, wherein a flow rate of the stored hot water is controlled such that a predetermined location of the fuel cell heating medium circulation circuit (33) is regulated to a predetermined temperature range.

9. The fuel cell system according to any one of claims 2 to 8, wherein the condensing coolant circulation circuit (35) exchanges heat with the fuel off-gas and the oxidant off-gas in that order.

10. The fuel cell system according to any one of claims 2 to 9, wherein the flow rate of the stored hot water is controlled such that the condensing coolant is held at or below 45°C.

11. The fuel cell system according to any one of claims 2 to 10, wherein the flow rate of the stored hot water is controlled such that the fuel cell heating medium is held between 60 and 70°C.

## Patentansprüche

1. Brennstoffzellensystem, das aufweist:
eine Brennstoffzelle (10) zum Erzeugen von Leistung unter Verwendung eines einer Brennstoffelektrode (11) zugeführten Brennstoffgases und eines einer Oxidationsmittelelektrode (12) zugeführten Oxidationsmittelgases;
einen Brennstoffzellenheizmedium-Zirkulationskreislauf (33) zum Zirkulieren eines Brennstoffzellenheizmediums, das Wärme mit der Brennstoffzelle (10) austauscht;
einen Brennstoffgaskondensator (51), welcher an dem Brennstoffzellenheizmedium-Zirkulationskreislauf (33) angeordnet ist und in welchem das Brennstoffzellenheizmedium und das der Brennstoffelektrode (11) zugeführte Brennstoffgas Wärme austauschen;
einen Zusatzheizmedium-Wärmetauscher (34), welcher an dem Brennstoffzellenheizmedium-Zirkulationskreislauf (33) angeordnet ist und in welchem das Brennstoffzellenheizmedium und ein Zusatzheizmedium Wärme austauschen; und
eine an dem Brennstoffzellenheizmedium-Zirkulationskreislauf (33) angeordnete elektrische Heizvorrichtung (33b), wobei
die elektrische Heizvorrichtung (33b) stromabwärtig zur Brennstoffzelle und stromaufwärtig zum Zusatzheizmedium-Wärmetauscher (34) angeordnet ist.

2. Brennstoffzellensystem nach Anspruch 1, das ferner aufweist:
einen Reformer (20) zum Erzeugen des Brennstoffgases und zum Zuführen des Brennstoffgases zur Brennstoffelektrode (11);
einen Zirkulationskreislauf (35) von kondensierendem Kühlmittel zum Zirkulieren eines kondensierenden Kühlmittels, das mit zumindest einem von der Brennstoffelektrode (11) ausgestoßene Brennstoffabgas, einem von der Oxidationsmittelelektrode (12) ausgestoßenen Oxidationsmittelabgas und einem von dem Reformer (20) ausgestoßenen Verbrennungsabgas Wärme austauscht;
einen Heißwasser-Speichertank (31) zum Speichern von gespeichertem Heißwasser; und
einen Zirkulationskreislauf (32) von gespeichertem Heißwasser zum Zirkulieren des gespeicherten Heißwassers, welches mit dem durch den Zirkulationskreislauf (35) von kondensierendem Kühlmittel zirkulierenden, kondensierenden Kühlmittel und dem durch den Brennstoffzellenheizmedium-Zirkulationskreislauf (33) zirkulierenden Brennstoffzellenheizmedium Wärme austauscht,
wobei in dem Zusatzheizmedium-Wärmetauscher (34) das Brennstoffzellenheizmedium und das durch den Zirkulationskreislauf (32) von gespeichertem Heißwasser zirkulierende, gespeicherte Heißwasser Wärme austauschen.

3. Brennstoffzellensystem nach Anspruch 1 oder 2, wobei die elektrische Heizvorrichtung (33b) überschüssige, durch die Brennstoffzelle erzeugte Leistung in Wärme umwandelt.

4. Brennstoffzellensystem nach einem der Ansprüche 1 bis 3, wobei das Brennstoffzellenheizmedium durch die elektrische Heizvorrichtung (33b) erwärmt wird, wenn das Brennstoffzellenheizmedium bei der Beendigung eines Aufwärmens des Reformers (20) während einer Aktivierung des Brennstoffzellensystems bei einer vorbestimmten Temperatur oder niedriger als diese ist.

5. Brennstoffzellensystem nach einem der Ansprüche 1 bis 4, wobei das Brennstoffzellenheizmedium in dem Brennstoffzellenheizmedium-Zirkulationskreislauf (33) auf der Basis einer Einlasstemperatur und einer Auslasstemperatur der Brennstoffzelle (10) erwärmt wird.

6. Brennstoffzellensystem nach einem der Ansprüche 2 bis 5, das ferner aufweist:
einen Brennstoffabgaskondensator (52), welcher an dem Zirkulationskreislauf (35) von kondensierendem Kühlmittel angeordnet ist und in welchem das kondensierende Kühlmittel und ein von der Brennstoffelektrode (11) ausgestoßenes Brennstoffabgas Wärme austauschen; und
einen Oxidationsmittelabgaskondensator (53), welcher an dem Zirkulationskreislauf (35) von kondensierendem Kühlmittel angeordnet ist und in welchem das kondensierende Kühlmittel und ein von der Oxidationsmittelelektrode (12) ausgestoßenes Oxidationsmittelabgas Wärme austauschen.

7. Brennstoffzellensystem nach einem der Ansprüche 2 bis 6, wobei das durch den Zirkulationskreislauf (32) von gespeichertem Heißwasser zirkulierende, gespeicherte Heißwasser mit dem durch den Zirkulationskreislauf (35) von kondensierendem Kühlmittel zirkulierenden, kondensierenden Kühlmittel und dem durch den Brennstoffzellenheizmedium-Zirkulationskreislauf (33) zirkulierenden Heizmedium in dieser Reihenfolge Wärme austauscht.

8. Brennstoffzellensystem nach einem der Ansprüche 2 bis 7, wobei eine Strömungsmenge des gespeicherten Heißwassers derart gesteuert wird, dass ein vorbestimmter Ort des Brennstoffzellenheizmedium-Zirkulationskreislaufs (33) auf einen vorbestimmten Temperaturbereich reguliert wird.

9. Brennstoffzellensystem nach einem der Ansprüche 2 bis 8, wobei der Zirkulationskreislauf (35) von kondensierendem Kühlmittel mit dem Brennstoffabgas und dem Oxidationsmittelabgas in dieser Reihenfolge Wärme austauscht.

10. Brennstoffzellensystem nach einem der Ansprüche 2 bis 9, wobei die Strömungsmenge des gespeicherten Heißwassers derart gesteuert wird, dass das kondensierende Kühlmittel auf 45°C oder darunter gehalten wird.

11. Brennstoffzellensystem nach einem der Ansprüche 2 bis 10, wobei die Strömungsmenge des gespeicherten Heißwassers derart gesteuert wird, dass das Brennstoffzellen-Heizmedium zwischen 60°C und 70°C gehalten wird.

## Revendications

1. Système de pile à combustible comprenant :
une pile à combustible (10) pour générer de l'énergie en utilisant un gaz combustible alimenté à une électrode à combustible (11) et un gaz oxydant alimenté à une électrode oxydante (12) ;
un circuit (33) de circulation d'un milieu chauffant de la pile à combustible pour faire circuler un milieu chauffant de pile à combustible qui échange de la chaleur avec la pile à combustible (10) ;
un condenseur de gaz combustible (51) qui est disposé sur le circuit (33) de circulation d'un milieu chauffant de la pile à combustible, et dans lequel le milieu chauffant de la pile à combustible et le gaz combustible alimenté à l'électrode à combustible (11) échangent de la chaleur ;
un échangeur de chaleur (34) de milieu chauffant supplémentaire qui est disposé sur le circuit (33) de circulation d'un milieu chauffant de la pile à combustible, et dans lequel le milieu chauffant de la pile à combustible et un milieu chauffant supplémentaire échangent de la chaleur ; et
un chauffage électrique (33b) disposé sur le circuit (33) de circulation d'un milieu chauffant de la pile à combustible, où
le chauffage électrique (33b) est disposé en aval de la pile à combustible et en amont de l'échangeur de chaleur (34) de milieu chauffant supplémentaire.

2. Système de pile à combustible selon la revendication 1, comprenant en outre :
un reformeur (20) pour générer le gaz combustible et alimenté le gaz combustible à l'électrode à combustible (11) ;
un circuit de circulation d'un fluide de refroidissement condensant (35) pour faire circuler un fluide de refroidissement condensant qui échange la chaleur avec au moins l'un parmi un gaz de dégagement combustible déchargé de l'électrode à combustible (11), un gaz de dégagement oxydant déchargé de l'électrode oxydante (12), et un gaz d'échappement de combustion déchargé du reformeur (20) ;
un réservoir de stockage d'eau chaude (31) pour stocker de l'eau chaude stockée ; et
un circuit (32) de circulation d'eau chaude stockée pour faire circuler l'eau chaude stockée, qui échange de la chaleur avec le fluide de refroidissement condensant qui circule à travers le circuit (35) de circulation d'un fluide de refroidissement condensant et le milieu chauffant de la pile à combustible circulant à travers le circuit (33) de circulation d'un milieu chauffant de la pile à combustible,
où, dans l'échangeur de chaleur (34) de milieu chauffant supplémentaire, le milieu chauffant de la pile à combustible et l'eau chaude stockée circulant dans le circuit (32) de circulation d'eau chaude stockée échangent de la chaleur.

3. Système de pile à combustible selon la revendication 1 ou 2, où le chauffage électrique (33b) convertit, en chaleur, l'énergie excédentaire générée par la pile à combustible.

4. Système de pile à combustible selon l'une quelconque des revendications 1 à 3, où, lorsque le milieu chauffant de la pile à combustible est à une température inférieure ou égale à une température prédéterminée à l'issue d'un réchauffage du réformateur (20) pendant l'activation du système de pile à combustible, le milieu chauffant de la pile à combustible est réchauffé par le chauffage électrique (33b).

5. Système de pile à combustible selon l'une quelconque des revendications 1 à 4, dans lequel le milieu chauffant de la pile à combustible est réchauffé dans le circuit (33) de circulation d'un milieu chauffant de la pile à combustible sur la base d'au moins une parmi une température d'entrée et une température de sortie de la pile à combustible (10).

6. Système de pile à combustible selon l'une quelconque des revendications 2 à 5, comprenant en outre :
un condenseur (52) de gaz de dégagement combustible qui est disposé sur le circuit (35) de circulation d'un fluide de refroidissement condensant, et dans lequel le liquide de refroidissement condensant et un gaz de dégagement combustible déchargé de l'électrode à combustible (11) échangent de la chaleur ; et
un condenseur (53) de gaz de dégagement oxydant qui est disposé sur le circuit (35) de circulation d'un fluide de refroidissement condensant, et dans lequel le fluide de refroidissement condensant et un gaz de dégagement oxydant déchargé de l'électrode oxydante (12) échangent de la chaleur.

7. Système de pile à combustible selon l'une quelconque des revendications 2 à 6, dans lequel l'eau chaude stockée circulant dans le circuit (32) de circulation d'eau chaude stockée échange de la chaleur avec le fluide de refroidissement condensant qui circule à travers le circuit (35) de circulation d'un fluide de refroidissement condensant et le milieu chauffant circulant dans le circuit (33) de circulation d'un milieu chauffant de la pile à combustible dans cet ordre.

8. Système de pile à combustible selon l'une quelconque des revendications 2 à 7, dans lequel un débit d'écoulement d'eau chaude stockée est régulé de sorte qu'un endroit prédéterminé du circuit (33) de circulation d'un milieu chauffant de la pile à combustible soit réglé à une plage de température prédéterminée.

9. Système de pile à combustible selon l'une quelconque des revendications 2 à 8, dans lequel le circuit (35) de circulation d'un fluide de refroidissement condensant échange de la chaleur avec le gaz de dégagement combustible et le gaz de dégagement oxydant dans cet ordre.

10. Système de pile à combustible selon l'une quelconque des revendications 2 à 9, dans lequel le débit d'écoulement de l'eau chaude stockée est régulé de sorte que le fluide de refroidissement condensant soit maintenu à une température inférieure ou égale à 45°C.

11. Système de pile à combustible selon l'une quelconque des revendications 2 à 10, dans lequel le débit d'écoulement de l'eau chaude stockée est régulé de sorte que le milieu chauffant de la pile à combustible soit maintenu à une température comprise entre 60°C et 70°C.
